# EUROPÄISCHE PATENTSCHRIFT

(11) **EP 2 864 383 B1**
(45) Veröffentlichungstag und Bekanntmachung des Hinweises auf die Patenterteilung: **02.10.2019**
(21) Anmeldenummer: 13729342.9
(22) Anmeldetag: 17.06.2013
(51) Int. Cl.: C08G 18/38, C08G 18/71, C08G 18/77, C09D 175/04

(54) **BESCHICHTUNGSMITTEL MIT HOHER KRATZBESTÄNDIGKEIT**
COATING AGENT HAVING HIGH SCRATCH RESISTANCE
AGENT DE REVÊTEMENT PRÉSENTANT UNE HAUTE RÉSISTANCE AUX RAYURES

(30) Priorität: 20.06.2012 EP 12172681; 26.11.2012 EP 12194204
(43) Veröffentlichungstag der Anmeldung: 29.04.2015
(73) Patentinhaber: Evonik Degussa GmbH, 45128 Essen (DE)
(72) Erfinder: LOMOELDER, Rainer, 48153 Münster (DE); GÖRLITZER, Hans, 44388 Dortmund (DE); HALLACK, Markus, 46514 Schermbeck (DE); UNKELHÄUSSER, Tobias, 45701 Herten (DE)
(74) Vertreter: Evonik Patent Association
(86) Internationale Anmeldenummer: PCT/EP2013/062506
(87) Internationale Veröffentlichungsnummer: WO 2013/189882

(56) Entgegenhaltungen:
- EP-A2- 1 273 640
- DE-A1-102007 020 404
- US-B1- 6 428 898

## Beschreibung

Die vorliegende Erfindung betrifft ein Beschichtungsmittel umfassend wenigstens ein aliphatisches oder cycloaliphatisches Polyisocyanat, das eine NCO-Funktionalität von wenigstens 2, bevorzugt 2,8 bis 6 aufweist, wenigstens ein Bindemittel, bevorzugt ein hydroxylgruppenhaltiges Bindemittel, wenigstens ein Addukt von einem Isocyanato-trialkyoxysilan und einem mehrwertigen Alkohol, wobei mehr als 90, bevorzugt mehr als 95, am bevorzugtesten mehr als 99 Prozent der Hydroxygruppen des mehrwertigen Alkohols durch Reaktion mit dem Isocyanatotrialkoxysilan umgesetzt sind und weniger als 0.1 Gew-% der Isocyanatgruppen aus dem Isocyanatotrialkyloxysilan im Addukt reaktiv sind, wenigstens einen Katalysator ausgewählt aus der Gruppe, die Lewis-Säuren, Phosphorsäure oder phosphorige Säure sowie deren Ester, blockierten oder unblockierten Sulfonsäuren, Schwefelsäure, Carbonsäuren mit einem Schmelzpunkt > 60 °C und Tetralkylammoniumcarboxylate umfasst, optional wenigstens ein Hilfsstoff, bevorzugt wenigstens ein weiterer Vernetzer, und/oder Zusatzstoff, und optional organische Lösungsmittel, sowie ein Verfahren umfassend Bereitstellen, Aufbringen auf eine Oberfläche und Aushärten des Beschichtungsmittels, eine Beschichtung erhältlich durch Aushärten des Beschichtungsmittels und eine Verwendung des Beschichtungsmittels zur Beschichtung einer Metall-, Glas-, Kunststoff- oder Holzoberfläche.

Aliphatische Polyurethanbeschichtungen auf der Basis von 2-Komponentensystemen sind für ihr hervorragendes Eigenschaftsprofil bekannt. Sie finden aufgrund ihrer hohen Witterungs- und Chemikalienbeständigkeit beispielsweise als Klarlacke im Bereich der Automobilerst- und - reparaturlackierung, der Flugzeuglackierung und der Beschichtung von Großfahrzeugen breite Anwendung.

Nachteilig bei aliphatischen Polyurethanlacken ist ihre mangelnde Kratzbeständigkeit. Dies kommt besonders bei Automobilklarlacken zum Tragen, die gemäß US-P 5137972 auf eine besonders hohe Beständigkeit gegen saure Umwelteinflüsse eingestellt sein müssen. Auch Standard-2K-PUR (Standard-2-Komponenten-Polyurethan)-Lacke weisen eine Kratzbeständigkeit auf, die den Anforderungen der Automobilindustrie häufig nicht mehr genügt, so dass sie modifiziert werden müssen, z.B. mit Nanopartikeln gemäß US-P 6387519.

Eine in der Literatur beschriebene Möglichkeit, die Kratzbeständigkeit von 2K-PUR-Lacken zu verbessern, besteht in der Verwendung von Polyisocyanat-Vernetzern, die partiell mit sekundären Aminosilanen derivatisiert sind. Die Beschichtungen erweisen sich bei Wärmehärtung als sehr leistungsfähig, so dass sie bereits in der Automobilerstlackierung eingesetzt werden können.

Teilsilanisierte Polyisocyanate für kratzfeste Klarlacke sind auch aus der EP-A 1273640 bekannt. Sie müssen über freie NCO-Gruppen verfügen, damit eine ausreichend schnelle Härtung erfolgen kann. Ferner werden die dort beschriebenen Vernetzer in wärmehärtenden Beschichtungen für die Automobillackierung verwendet, d. h., es wird bei Temperaturen oberhalb von 120 °C ausgehärtet.

Ein bedeutender Nachteil der hoch kratzbeständigen Klarlacke auf Basis von Umsetzungsprodukten von Polyisocyanaten und sekundären Aminosilanen ist das vergleichsweise hohe Molekulargewicht der Vernetzerkomponenten gegenüber Polyisocyanatvernetzern von 2K-PUR-Lacken, was zu einer vergleichsweise deutlich höheren Viskosität der Komponenten führt und damit zu deutlich geringeren Festkörpergehalten und höheren Anteilen an flüchtigen Lösungsmitteln der Lackformulierungen bei gleicher Applikationsviskosität führt. Das Dokument DE102007020404 A1 offenbart ein Verfahren zur Herstellung eines kratzfesten Beschichtungsmaterials. In den Beispielen 1-2 wird zuerst die Herstellung von Addukten aus einem Isocyanato-trialkoxysilan und einem Diol beschrieben. Das molare äquivalent Verhältnis des Diols zu dem Isocyanatoalkoxysilan beträgt in den Beispielen 1-2 gerade 1:1, sodass theoretisch alle Hydroxylgruppen mit allen Isocyanatgruppen reagiert sind.

Die der vorliegenden Erfindung zu Grunde liegende Aufgabe besteht in der Bereitstellung eines Beschichtungsmittels, das nach Aushärtung als Bestandteil einer Beschichtung auf Oberflächen oder als Bestandteil von Lackformulierungen eine hohe Kratz- und Chemikalienbeständigkeit der das ausgehärtete Beschichtungsmittel enthaltenden Beschichtung oder des ausgehärteten Lacks bewirkt.

Eine weitere der vorliegenden Erfindung zu Grunde liegende Aufgabe besteht in der Bereitstellung eines Beschichtungsmittels mit möglichst hohem Festkörpergehalt.

Diese und weitere Aufgaben werden durch den Gegenstand der vorliegenden Anmeldung und insbesondere auch durch den Gegenstand der beigefügten unabhängigen Ansprüche gelöst, wobei sich Ausführungsformen aus den Unteransprüchen ergeben.

Das der Erfindung zu Grunde liegende Problem wird in einem ersten Aspekt gelöst durch ein Beschichtungsmittel umfassend
A) wenigstens ein aliphatisches oder cycloaliphatisches Polyisocyanat, das eine NCO-Funktionalität von wenigstens 2, bevorzugt 2,8 bis 6 aufweist,
B) wenigstens ein Bindemittel, bevorzugt ein hydroxylgruppenhaltiges Bindemittel, wobei der Anteil von B), bezogen auf die Summe der Komponenten A), B) und C), 20 bis 60 Gewichtsprozent beträgt,
C) wenigstens ein Addukt von einem Isocyanato-trialkyoxysilan und einem mehrwertigen Alkohol,
   wobei bevorzugt mehr als 90, bevorzugter mehr als 95, am bevorzugtesten mehr als 99 Prozent der Hydroxygruppen des mehrwertigen Alkohols durch Reaktion mit dem Isocyanato-trialkoxysilan umgesetzt sind und/oder weniger als 0.1 Gew-% der Isocyanatgruppen aus dem Isocyanatotrialkyloxysilan im Addukt reaktiv sind,
D) wenigstens einen Katalysator ausgewählt aus der Gruppe, die Lewis-Säuren, Phosphorsäure oder phosphorige Säure sowie deren Ester, blockierte oder unblockierte Sulfonsäuren, Schwefelsäure, Carbonsäuren mit einem Schmelzpunkt > 60 °C und Tetralkylammoniumcarboxylate umfasst.
E) optional wenigstens ein Hilfsstoff ausgewählt aus der Gruppe umfassend isocyanatfreie Vernetzer, Additive, Stabilisatoren und Zusatzstoffe, und
F) optional organische Lösungsmittel.

In einer ersten Ausführungsform des ersten Aspekts wird das Problem gelöst durch ein Beschichtungsmittel, wobei der Anteil von A), bezogen auf die Summe der Komponenten A), B) und C), 15 bis 40 Gewichtsprozent beträgt.

In einer zweiten Ausführungsform des ersten Aspekts, die auch eine Ausführungsform des ersten Aspektes darstellt, wird das Problem gelöst durch ein Beschichtungsmittel, wobei der Anteil von C), bezogen auf die Summe der Komponenten A), B) und C), 10 bis 70 Gewichtsprozent beträgt.

In einer dritten Ausführungsform des ersten Aspekts, die auch eine Ausführungsform des ersten bis zweiten Aspektes darstellt, wird das Problem gelöst durch ein Beschichtungsmittel, wobei das wenigstens eine aliphatische oder cycloaliphatische Polyisocyanat durch Oligomerisierung eines Diisocyanates hergestellt wird,
wobei das Diisocyanat bevorzugt aus der Gruppe ausgewählt ist, die Isophorondiisocyanat, Hexamethylendiisocyanat, 4,4'- und/oder 2,4'-Diisocyanatodicyclohexylmethan, 2-Methylpentandiisocyanat, 2,4,4-Trimethylhexamethylendiisocyanat und 2,2,4-Trimethylhexamethylendiisocyanat umfasst.

In einer vierten Ausführungsform des ersten Aspekts, die auch eine Ausführungsform des ersten bis dritten Aspektes darstellt, wird das Problem gelöst durch ein Beschichtungsmittel, wobei das wenigstens eine Bindemittel aus der Gruppe ausgewählt ist, die hydroxylgruppenhaltige Polyester, Polyether, Polyacrylate, Polycarbonate und Polyurethane umfasst,
und wobei das Bindemittel eine OH-Zahl von 20 bis 500 mg KOH/g und eine mittlere Molmasse von 250 bis 6000 g/Mol aufweist.

In einer fünften Ausführungsform des ersten Aspekts, die auch eine Ausführungsform des ersten bis vierten Aspektes darstellt, wird das Problem gelöst durch ein Beschichtungsmittel, wobei es sich bei dem Addukt von einem Isocyanato-trialkyoxysilan und mehrwertigen Alkohol um ein Addukt aus der Umsetzung von einem Isocyanato-trialkyoxysilan, das einen mit wenigstens einer -Si(OR₁)(OR₂)(OR₃)-Gruppe und einer Isocyanatgruppe substituierten Alkylrest darstellt, und einem mehrwertigen Alkohol handelt,
wobei es sich bei dem mit wenigstens einer -Si(OR₁)(OR₂)(OR₃)-Gruppe und einer Isocyanatgruppe substituierten Alkylrest um lineares oder verzweigtes Alkan mit 1 bis 4 Kohlenstoffatomen handelt.
und wobei R₁, R₂ und R₃ jeweils und unabhängig voneinander aus der Gruppe ausgewählt sind, die Methyl, Ethyl, Propyl und Butyl umfasst.

In einer sechsten Ausführungsform des ersten Aspekts, die auch eine Ausführungsform des ersten bis fünften Aspektes darstellt, wird das Problem gelöst durch ein Beschichtungsmittel, wobei es sich bei dem Isocyanato-trialkyoxysilan um eine Verbindung der Formel (I) handelt,

OCN-(CH₂)ₙ-Si(OR₁)(OR₂)(OR₃) (I),

wobei n 1, 2, 3, 4, 5 oder 6, bevorzugt 3, ist,
und wobei R₁, R₂ und R₃ jeweils und unabhängig voneinander aus der Gruppe ausgewählt sind, die Methyl, Ethyl und Propyl umfasst, und bevorzugt jeweils Methyl sind.

In einer siebten Ausführungsform des ersten Aspekts, die auch eine Ausführungsform des ersten bis sechsten Aspektes darstellt, wird das Problem gelöst durch ein Beschichtungsmittel, wobei das Beschichtungsmittel bei 10 bis 200 °C, bevorzugt 20 bis 160 °C härtbar ist.

In einer achten Ausführungsform des ersten Aspekts, die auch eine Ausführungsform des ersten bis siebten Aspektes darstellt, wird das Problem gelöst durch ein Beschichtungsmittel, wobei es sich bei dem Beschichtungsmittel um ein nicht wässriges Beschichtungsmittel handelt.

In einer neunten Ausführungsform des ersten Aspekts, die auch eine Ausführungsform des ersten bis achten Aspekts darstellt, wird das Problem gelöst durch ein Beschichtungsmittel, wobei der mehrwertige Alkohol im Addukt C) zu wenigstens 75, bevorzugt wenigstens 90, noch bevorzugter wenigstens 95% ein nichtzyklischer mehrwertiger Alkohol ist.

In einem zweiten Aspekt wird das der Erfindung zu Grunde liegende Problem gelöst durch ein Verfahren umfassend die Schritte
a) Bereitstellung des Beschichtungsmittels nach einem der Ansprüche 1 bis 10,
b) Aufbringen des Beschichtungsmittels auf eine zu beschichtende Oberfläche, und
c) Aushärten des Beschichtungsmittels.

In einer ersten Ausführungsform des zweiten Aspekts wird das Problem gelöst durch ein Verfahren, wobei die Temperatur in Schritt c) 10 bis 200 °C, bevorzugt 20 bis 160 °C beträgt.

In einem dritten Aspekt wird das der Erfindung zu Grunde liegende Problem gelöst durch eine Beschichtung erhältlich durch Aushärten des Beschichtungsmittels nach dem ersten Aspekt oder einer Ausführungsform davon oder durch das Verfahren nach dem zweiten Aspekt oder einer Ausführungsform davon.

In einem vierten Aspekt wird das der Erfindung zu Grunde liegende Problem gelöst durch eine Metall-, Glas-, Kunststoff- oder Holzoberfläche umfassend die Beschichtung nach dem dritten Aspekt.

In einem fünften Aspekt wird das der Erfindung zu Grunde liegende Problem gelöst durch einen Primer, Zwischenschicht, Decklack oder Klarlack, bevorzugt als Bestandteil eines Decklacks oder Klarlacks in einer Mehrschichtlackierung bei der Fahrzeuglackierung, umfassend das Beschichtungsmittel nach dem ersten Aspekt oder einer Ausführungsform davon.

In einem sechsten Aspekt wird das der Erfindung zu Grunde liegende Problem gelöst durch eine Verwendung des Beschichtungsmittels nach dem ersten Aspekt oder einer Ausführungsform davon zur Beschichtung einer Metall-, Glas-, Kunststoff- oder Holzoberfläche.

Die vorliegende Erfindung beruht auf der überraschenden Erkenntnis der Erfinder, dass die Verwendung eines Adduktes von einem Isocyanato-trialkyoxysilan und einem mehrwertigen Alkohol als Bestandteil eines Beschichtungsmittels nach Vernetzung durch ein Polyisocyanat zur Ausbildung einer Beschichtung führt, die herkömmlichen Beschichtungen gegenüber vorteilhafte Materialeigenschaften zeigt, insbesonders eine besonders hohe Kratz- und Chemikalienbeständigkeit und eine hohe Beständigkeit gegen Überbrennvergilbung. Weiterhin weist das Beschichtungsmittel überraschend einen besonders hohen Festkörpergehalt auf.

Das erfindungsgemäße Beschichtungsmittel besteht bevorzugt im Wesentlichen aus den Komponenten A), B), C), D) und E). In einer bevorzugten Ausführungsform bedeutet dies, dass die Summe der Komponenten A), B), C), D) und E) in der Reihenfolge zunehmender Bevorzugung wenigstens 45, 50, 55, 60, 65, 70, 75, 80, 85, 90, 92, 94, 96, 98 oder 99 Gewichtsprozent des Beschichtungsmittels ausmachen.

In einer bevorzugten Ausführungsform handelt es sich bei den erfindungsgemäßen Beschichtungsmittel um ein nicht wässriges Beschichtungsmittel. In einer besonders bevorzugten Ausführungsform bedeutet der Begriff "nicht wässrig", wie hierin verwendet, dass das erfindungsgemäße Beschichtungsmittel bezogen auf die Summe der Komponenten A), B), C), D) und E) einen Wasseranteil von nicht mehr als 3 Gewichtsprozent, bevorzugt nicht mehr als 1 Gewichtsprozent aufweist. In einer bevorzugtesten Ausführungsform ist das erfindungsgemäße Beschichtungsmittel frei von Wasser.

Das als Vernetzerkomponente verwendete aliphatische oder cycloaliphatische Polyisocyanat A) umfasst mindestens ein aliphatisches und/oder cycloaliphatisches Polyisocyanat mit einer NCO-Funktionalität von wenigstens 2, bevorzugt 2 bis 6, bevorzugter von 2,8 bis 6, am bevorzugtesten 2 bis 4. In einer bevorzugten Ausführungsform wird unter dem Begriff "NCO-Funktionalität", wie hierin verwendet, die Zahl der reaktiven NCO-Substituenten verstanden, die das entsprechende Molekül, bevorzugt die Vernetzerkomponente A), durchschnittlich aufweist.

Das erfindungsgemäß eingesetzte Polyisocyanat kann ein beliebiges aliphatisches, cycloaliphatisches und/oder (cyclo)aliphatisches Diisocyanat sein. In einer bevorzugten Ausführungsform wird unter dem Begriff "(cyclo)aliphatisches Diisocyanat", wie hierin verwendet, verstanden, dass in einem Molekül gleichzeitig an einen Ring gebundene NCO-Gruppen und an einen aliphatischen Rest gebundene NCO-Gruppen vorhanden sind, wie es z. B. beim Isophorondiisocyanat der Fall ist. In einer bevorzugten Ausführungsform wird unter dem Begriff "cycloaliphatisches Diisocyanat", wie hierin verwendet ein Diisocyanat verstanden, das nur direkt am cycloaliphatischen Ring gebundene NCO-Gruppen aufweist, z. B. Diisocyanato-dicyclohexylmethan (H₁₂MDI).

Zur Verwendung als Polyisocyanat A) geeignete aliphatische Diisocyanate umfassen einen linearen oder verzweigten Alkylenrest mit bevorzugt 3 bis 16 Kohlenstoffatome, bevorzugter 4 bis 12 Kohlenstoffatome. Geeignete cycloaliphatische oder (cyclo)aliphatische Diisocyanate umfassen einen Cycloalkylenrest mit bevorzugt 4 bis 18 Kohlenstoffatomen, bevorzugter 6 bis 15 Kohlenstoffatomen, auf. Beispiele geeigneter Di- oder Polyisocyanate umfassen Cyclohexandiisocyanat, Methylcyclohexandiisocyanat, Ethylcyclo-hexandiisocyanat, Propylcyclohexandiisocyanat, Methyldiethylcyclohexan-diisocyanat, Propandiisocyanat, Butandiisocyanat, Pentandiisocyanat, Hexandiisocyanat, Heptandiisocyanat, Octandiisocyanat, Nonandiisocyanat, Nonantriisocyanat, wie 4-Isocyanatomethyl-1,8-octandiisocyanat (TIN), Dekandi- und triisocyanat, Undekandi- und -triisocyanat, Dodecandi- und -triisocyanate. Ebenfalls geeignet sind 4-Methyl-cyclohexan-1,3-diisocyanat, 2-Butyl-2-ethylpentamethylen-diisocyanat, 3(4)-Isocyanatomethyl-1-methylcyclohexylisocyanat, 2-Isocyanatopropylcyclohexylisocyanat, 2,4'-Methylenbis(cyclohexyl)diisocyanat und/oder 1,4-Diisocyanato-4-methyl-pentan.

Bevorzugt ist das als Polyisocyanat verwendete Diisocyanat ausgewählt aus de Gruppe, die Isophorondiisocyanat (IPDI), Hexamethylendiisocyanat (HDI), Diisocyanato-dicyclohexylmethan (H₁₂MDI), 2-Methylpentandiisocyanat (MPDI), 2,2,4-Trimethylhexamethylendiisocyanat/2,4,4-Trimethylhexamethylendiisocyanat (TMDI), Nor-bornandiisocyanat (NBDI) umfasst. Besonders bevorzugt sind IPDI, HDI, TMDI und/oder H₁₂MDI eingesetzt, wobei IPDI, H₁₂MDI und/oder HDI die bevorzugtesten Polyisocyanate darstellen.

Es werden besonders bevorzugt Polyisocyanate verwendet, die sich aus den genannten Diisocyanaten oder deren Mischungen durch Verknüpfung mittels Urethan-, Allophanat-, Harnstoff-, Biuret-, Uretdion-, Amid-, Isocyanurat-, Carbodiimid-, Uretonimin-, Oxadiazintrion- oder Iminooxadiazindion-Strukturen herstellen lassen. Solche Polyisocyanate sind im Handel erhältlich, z.B. VESTANAT HT 2500 L. Besonders geeignet sind Isocyanurate, insbesondere aus IPDI und/oder HDI. Derartige Polyisocyanate können gegebenenfalls mit Di- oder polyfunktionellen, H-aciden Komponenten, wie z. B. Di- oder Polyolen und/oder Di- oder Polyaminen, zusätzlich kettenverlängert oder verzweigt sein. Die erfindungsgemäß bevorzugt zu verwendenden sind durch destillative Abtrennung von Restmonomeren befreit, so dass der Gehalt an Diisocyanat-Restmonomer <0.5 Gew.-% beträgt.

Im Rahmen der vorliegenden Erfindung können beliebige Gemische der vorab beschriebenen Di- und/oder Polyisocyanate eingesetzt werden.

Die Komponente A) ist in der erfindungsgemäßen Beschichtungszusammensetzung zu 5 bis 50 Gewichtsprozent, bevorzugt 15 bis 40 Gewichtsprozent, bezogen auf die Summe der Komponenten A), B) und C) enthalten. Beispielsweise ist A) bezogen auf die Summe der Komponenten A), B) und C) zu 50 Gewichtsprozent in dem erfindungsgemäßen Beschichtungsmittel enthalten, wenn 25 g A), 12,5 g B) und 12,5 g C) enthalten sind. Das molare Verhältnis der Isocyanatgruppen der Komponente A) und der OH-Gruppen der Komponente B) beträgt in einer bevorzugten Ausführungsform 0,3:1 bis 2:1, bevorzugter 0,5:1 bis 1,5:1 und am bevorzugtesten 0,7:1 bis 1,3:1.

Das erfindungsgemäße Beschichtungsmittel enthält als Komponente B) wenigstens ein Bindemittel. Grundsätzlich eignet sich als Bindemittel alle dem Fachmann bekannten Arten von Bindemitteln, beispielsweise auch thermoplastische, das heißt nicht vernetzbare Bindemittel, die üblicherweise ein mittleres Molekulargewicht > 10000 g/mol aufweisen. Bevorzugt werden jedoch Bindemittel, die über wenigstens eine, bevorzugt jedoch mehr als eine reaktive funktionelle Gruppe mit wenigstens einem aciden Wasserstoffatom, z. B. Hydroxyl- oder primäre oder sekundäre Amingruppen, verfügen. Geeignete Bindemittel der genannten Art weisen beispielsweise mindestens eine, bevorzugt jedoch zwei oder mehr Hydroxylgruppen auf. Weitere geeignete funktionelle Gruppen des Bindemittels sind beispielsweise Trialkoxysilan-Funktionalitäten.

Als Bindemittel mit funktionellen Gruppen werden bevorzugt hydroxylgruppenhaltige Polyester, Polyether, Polyacrylate, Polycarbonate und Polyurethane mit einer OH-Zahl von 20 bis 500 mg KOH/g und einer mittleren Molmasse von 250 bis 6000 g/Mol eingesetzt. Besonders bevorzugt werden im Rahmen der vorliegenden Erfindung Hydroxylgruppen-haltige Polyester oder Polyacrylate mit einer OH-Zahl von 50 bis 250 mg KOH/g und einem mittleren Molekulargewicht von 500 bis 6000 g/mol als Bindemittelkomponenten eingesetzt. Die Hydroxylzahl (OH-Zahl, OHZ) wird bestimmt nach DIN 53240-2. Bei diesem Verfahren wird die Probe mit Essigsäureanhydrid in Gegenwart von 4-Dimethylaminopyridin als Katalysator umgesetzt, wobei die Hydroxylgruppen acetyliert werden. Dabei entsteht pro Hydroxylgruppe ein Molekül Essigsäure, während die anschließende Hydrolyse des überschüssigen Essigsäureanhydrids zwei Moleküle Essigsäure liefert. Der Verbrauch an Essigsäure wird titrimetrisch aus der Differenz zwischen Hauptwert und einem parallel durchzuführenden Blindwert ermittelt. Das Molekulargewicht wird bestimmt mittels Gelpermeationschromatographie (GPC). Die Charakterisierung der Proben erfolgt in Tetrahydrofuran als Eluent nach DIN 55672-1.

Als als Bindemittel eingesetztes hydroxylgruppenhaltiges (Meth)acryl-Copolymerisat können Harze mit einer Monomerzusammensetzung, wie sie z. B. in WO 93/15849 (S. 8, Zeile 25 bis S. 10, Zeile 5, beschrieben sind, verwendet werden. Dabei sollte die durch anteilige Verwendung von (Meth)acrylsäure als Monomer einzustellende Säurezahl des (Meth)acryl-Copolymerisates 0 bis 30, vorzugsweise 0 bis 15 mg KOH/g betragen. Das zahlenmittlere Molgewicht (ermittelt durch Gelpermeationschromatographie gegen einen Polystyrolstandard) des (Meth)acryl-Copolymerisates beträgt vorzugsweise 2000 bis 20000 g/mol, die Glasübergangstemperatur beträgt vorzugsweise - 40°C bis + 60 °C. Der durch anteilige Verwendung von Hydroxyalkyl(meth)acrylaten einzustellende Hydroxylgehalt der erfindungsgemäß zu verwendenden (Meth)acryl-Copolymerisate beträgt vorzugsweise 20 bis 500 mg KOH/g, besonders bevorzugt 50 bis 250 mg KOH/g.

Erfindungsgemäß als Bindemittel geeignete Polyesterpolyole sind Harze mit einer Monomerzusammensetzung aus Di- und Polycarbonsäuren und Di- und Polyolen, wie sie in der WO 93/15849 beschrieben sind. Als Polyesterpolyole können auch Polyadditionsprodukte von Caprolacton an niedermolekulare Di- und Triole, wie sie z. B. unter der Bezeichnung CAPA® (Perstorp) erhältlich sind, eingesetzt werden. Das rechnerisch bestimmte zahlenmittlere Molgewicht beträgt vorzugsweise 500 bis 5000 g/mol, besonders bevorzugt 800 bis 3000 g/mol, die mittlere Funktionalität beträgt vorzugsweise 2,0 bis 4,0, bevorzugt 2,0 bis 3,5.

Als erfindungsgemäß als Bindemittel zu verwendende urethan- und estergruppenhaltige Polyole kommen prinzipiell auch solche zum Einsatz, wie sie in EP 140 186 beschrieben sind. Bevorzugt sind urethan- und estergruppenhaltige Polyole, zu deren Herstellung HDI, IPDI, Trimethylhexamethylendiisocyanat (TMDI) oder Dicyclohexylmethandiisocyanat (H₁₂-MDI) verwendet werden, eingesetzt. Das zahlenmittlere Molgewicht beträgt vorzugsweise 500-5000 g/mol, die mittlere Funktionalität liegt insbesondere im Bereich von 2,0 - 3,5.

Auch Trialkoxysilan-funktionelle Bindemittel eignen sich zur Verwendung als Komponente B). Derartige Harze können durch Copolymerisation von Acrylat- oder Methacrylat-Monomeren mit acryl- oder methacryl-funktionellen Alkyl-Trialkoxysilan-Derivaten (z. B. Dynasylan MEMO der Evonik Industries AG) gewonnen werden, wie zum Beispiel in der WO 92/11328 beschrieben. Ein alternativer Syntheseweg besteht in der Derivatisierung von hydroxylgruppenhaltigen Polyethern, Polyestern, Polycarbonat-diolen oder Polyacrylaten mit Isocyanatopropyltrialkoxysilan, wie sie beispielsweise in WO2008/131715 in den Beispielen 3 und 4 beschrieben ist.

Selbstverständlich können auch Mischungen der vorab beschriebenen Bindemittel eingesetzt werden. Bevorzugte Bindemittel sind hydroxylgruppenhaltige Polyester und Polyacrylate, allein oder in Mischungen.

Der Anteil von B) in dem erfindungsgemäßen Beschichtungsmittel beträgt, bezogen auf die Summe der Komponenten A), B) und C), 20 bis 60 Gewichtsprozent.

Das Mischungsverhältnis der Komponenten A) und B) ist durch das Äquivalentgewicht bzgl. OH- und NCO-Funktionalität bestimmt. Dabei ist stöchiometrische Verhältnis OH:NCO bevorzugt 0,5:1 bis 1.5:1, noch bevorzugter 0,7:1 bis 1.3:1.

Bei der wenigstens einen essentiellen Komponente C) des erfindungsgemäßen Beschichtungsmittels handelt um ein Addukt von einem Isocyanato-trialkyoxysilan und einem mehrwertigen Alkohol, wobei mehr als 90, bevorzugter mehr als 95, am bevorzugtesten mehr als 99 Prozent der Hydroxygruppen des mehrwertigen Alkohols durch Reaktion mit dem Isocyanato-trialkoxysilan umgesetzt sind und weniger als 0.1 Gew-% der Isocyanatgruppen aus dem Isocyanatotrialkyloxysilan im Addukt reaktiv sind,. In einer bevorzugten Ausführungsform wird unter dem Begriff "mehrwertiger Alkohol", wie hierin verwendet, eine organische Verbindung mit wenigstens zwei Hydroxylgruppen verstanden, die bevorzugt jeweils kovalent an ein Kohlenstoffatom gebunden sind. Insbesondere eignen sich aliphatische verzweigte Diole oder Polyole. Vorzugsweise weist der mehrwertige Alkohol ein Molekulargewicht von 62 bis 314 g/mol, besonders bevorzugt von 90 bis 206 g/mol auf. Es können auch Mischungen verschiedener mehrwertiger Alkohole zur Herstellung des Addukts verwendet werden. In einer bevorzugten Ausführungsform ist der mehrwertige Alkohol aus der Gruppe ausgewählt, die Ethylenglycol, 1,2-Propandiol, 1,3-Propandiol, 1,4-Butandiol, 1,5-Pentandiol, 1,6-Hexandiol, 1,10-Decandiol, 1,12-Dodecandiol, Glycerin, Isosorbit, Isomannit, Isoidit, 2,2,4-Trimethylhexandiol-1,6 und 2,4,4-Trimethylhexandiol-1,6 allein oder als beliebige Gemische dieser Isomeren, 2,2-Dimethyl-butandiol-1,3, 2-Methyl-pentandiol-2.4, 3-Methyl-pentandiol-2.4, 2,2,4-Trimethy-1-pentandiol-1,3,2-Ethylhexandiol-1,3,2,2-Dimethylhexandiol-1,3,3-Methylpentandiol-1,5,2-Methyl-pentandiol-1,5,2,2-Dimethylpropandiol-1,3 (Neopentylglykol), Hydroxypivalinsäureneopentylglykolester, Polyethylenglykol, Polypropylenglykol, Sorbit, Pentaerythrit, 1,1,1-Trimethylolpropan, 3(4),8(9)-Bis(hydroxymethyl)-tricyclo[5.2.1.02,6]decan (Dicidol) und/oder 2,2-Bis-(4-hydroxycyclohexyl)propan umfasst. Besonders bevorzugt sind 1,1,1-Trimethylolpropan, 3-Methylpentandiol-1,5, Neopentylglykol, 2,2,4-Trimethylhexandiol-1,6 und 2,4,4-Trimethylhexandiol-1,6, allein oder als beliebige Gemische dieser Isomeren und/oder als Hydroxypivalinsäureneopentylglykolester eingesetzt. Die genannten Verbindungen können dabei jeweils allein oder in Form ihrer Mischungen eingesetzt werden. In einer bevorzugtesten Ausführungsform wird 2,2,4-Trimethylhexandiol-1,6 und 2,4,4-Trimethylhexandiol-1,6 allein oder als Mischungen dieser Isomeren in einem beliebigen Verhältnis eingesetzt.

Zusätzlich können als mehrwertiger Alkohol auch bis zu einem Anteil von 40 Gewichtsprozent weitere Diole und/oder Polyole in dem erfindungsgemäßen Beschichtungsmittel enthalten sein, beide denen es sich um niedermolekulare Verbindungen und/oder aus hydroxylgruppenhaltige Polymere handeln kann.

Erfindungsgemäß ist bevorzugt, dass der mehrwertige Alkohol im Addukt C) in Reihenfolge zunehmender Bevorzugung zu wenigstens 75, 80, 85, 90, 95% oder 99 % ein nichtzyklischer mehrwertiger Alkohol ist. Das bedeutet, dass die entsprechende Prozentzahl der im Addukt enthaltenen Moleküle des mehrwertigen Alkohols nichtzyklisch sind. Unter dem Begriff "nichtzyklisch" fällt in einer bevorzugten Ausführungsform, wie hierin verwendet, jeder Strukturbestandteil, der keinen ringförmigen Kohlenwasserstoff mit oder ohne Heteroatome als Strukturbestandteil aufweist.

Unter niedermolekularen Verbindungen sind als mehrwertige Alkohole zur Herstellung der Komponente C) ferner oligomere Diole wie z. B. Polypropylenglykole, Polybutylenglykole, Diethylen-, Dipropylen-, Triethylen-, Tetraethylenglykol geeignet. Als polyfunktionelle Diole mit n>2 sind Glycerin, Hexandiol, Hexantriol-1,2,6, Butantriol-1,2,4, Tris-(β-hydroxyethyl)isocyanurat, Mannit oder Sorbit, geeignet. Diese Komponenten können allein oder als Mischungen verwendet werden.

Weiterhin sind als mehrwertige Alkohole zur Herstellung der Komponente C) hydroxylgruppenhaltige Polymere wie Polyester, Polyether, Polyacrylate, Polycarbonate und Polyurethane mit einer OH-Zahl von 20 bis 500 mg KOH/Gramm und einer mittleren Molmasse von 250 bis 6000 g/Mol als zusätzliche mehrwertige Alkohole geeignet. Besonders bevorzugt sind hydroxylgruppenhaltige Polyester und/oder Polyacrylate mit einer OH-Zahl von 20 bis 150 mg KOH/Gramm und einem mittleren Molekulargewicht von 500 bis 6000 g/mol. Die Hydroxylzahl (OHZ) wird nach DIN 53240-2 bestimmt.

Darüber hinaus können auch Mischungen der oben genannten Polymere oder Mischungen mit monomeren oder oligomeren Di- oder Polyolen als zusätzliche Polyole eingesetzt werden umfasst.

In einer bevorzugten Ausführungsform handelt es sich bei dem zur Herstellung der Komponente C) verwendeten Isocyanato-trialkyoxysilan um eine Verbindung, die einen mit wenigstens einer -Si(OR₁)(OR₂)(OR₃)-Gruppe und einer Isocyanatgruppe substituierten Alkylrest darstellt aufweist, wobei es sich bei dem Alkylrest um ein wenigstens zweifach substituiertes lineares oder verzweigtes Alkan mit 1 bis 4 Kohlenstoffatomen handelt. In einer besonders bevorzugten Ausführungsform sind R₁, R₂ und R₃ dabei gleich und entweder Methyl oder Ethyl. Als Isocyanato-trialkyloxysilan sind z. B. 3-Isocyanatopropyltrimethoxysilan, 3-Isocyanatopropyltriethoxysilan, 3-Isocyanato-propyltriisopropoxysilan, 2-Isocyanatoethyltrimethoxysilan, 2-Isocyanatoethyltriethoxysilan, 2-Isocyanatoethyltriisopropoxysilan, 4-Isocyanatobutyltrimethoxysilan, 4-Isocyanatobutyl-triethoxysilan, 4-Isocyanatobutyltriisopropoxysilane, Isocyanatomethyltrimethoxysilan, Isocyanatomethyltriethoxysilan und/oder Isocyanatomethyltriisopropoxysilan geeignet.

Erfindungsgemäß ist mit Hinblick auf die Komponente C) besonders bevorzugt, dass mehr als 90, bevorzugter mehr als 95, am bevorzugtesten mehr als 99 Prozent der Hydroxygruppen des mehrwertigen Alkohols durch Reaktion mit dem Isocyanato-trialkoxysilan umgesetzt sind und/oder weniger als 0,1 Gew-% der Isocyanatgruppen aus dem Isocyanatotrialkyloxysilan im Addukt reaktiv sind. Dass weniger als 0,1 Gew-% der Isocyanatgruppen aus dem Isocyanatotrialkyloxysilan im Addukt reaktiv sind, bedeutet in einer bevorzugten Ausführungsform, dass im Addukt mehr als 99,9 Gew.% der Isocyanatgruppen, die aus dem Isocyanattrialkyloxysilan stammen, nicht in freier, reaktiver Form vorliegen, sondern mit einer reaktiven Gruppe, beispielsweise einer Hydroxygruppe, reagiert haben und für weitere Reaktionen mit reaktiven Gruppen, bevorzugt Hydroxygruppen, nicht mehr zur Verfügung stehen. In einer bevorzugteren Ausführungsform sind weniger als 0,05 Gew.% der Isocyanatgruppen aus dem Isocyanatotrialkyloxysilan im Addukt reaktiv, in einer bevorzugtesten Ausführungsform weniger als 0,01 Gew.%. Dem Fachmann ist es im Rahmen routinemäßiger Versuche leicht möglich, die Reaktionsbedingungen bei der Herstellung des Addukts so zu gestalten, dass diese Eigenschaft erreicht wird. Insbesondere von Bedeutung bei der Herstellung der erfindungsgemäßen Addukte aus mehrwertigem Alkohol und Isocyanato-trialkoxysilan ist das stöchiometrische Verhältnis aus OH-Gruppen und NCO-Gruppen der Reaktionspartner. Bevorzugt beträgt das Verhältnis aus OH:NCO der Ausgangskomponenten bei der Herstellung des Addukts 1,1 : 1 bis 1 : 1. Ebenso sind dem Fachmann aus dem Stand der Technik und als Teil seines Fachwissens Verfahren bekannt, mit denen die Zahl der reaktiven NCO-Gruppen bestimmt werden kann.

Die Herstellung der erfindungsgemäßen Addukte als Komponente C) erfolgt im Allgemeinen lösungsmittelfrei oder unter Verwendung von nicht-protischen Lösemitteln, wobei die Umsetzung diskontinuierlich oder kontinuierlich erfolgen kann. Die Reaktion kann bei Raumtemperatur, das heißt bei Temperaturen im Bereich von 20 bis 25 °C, geführt werden, bevorzugt werden jedoch höhere Temperaturen im Bereich 30 bis 150 °C, insbesondere im Bereich von 40 bis 100 °C verwendet. Zur Beschleunigung der Reaktion können vorteilhaft in der Urethanchemie bekannte Katalysatoren wie Sn-, Bi-, Zn- und andere Metallcarboxylate, tert.-Amine wie beispielsweise 1,4-Diazabicyclo[2.2.2]octan (DABCO), Triethylamin etc. eingesetzt werden. Die Reaktion wird bevorzugt unter Ausschluss von Wasser durchgeführt.

Das erfindungsgemäße Beschichtungsmittel stellt ein Zweikomponenten-System dar. Dabei kann die Komponente C) sowohl der Lackkomponente A), dem Polyisocyanatvernetzer, als auch der Lackkomponente B) dem Bindemittel, zugesetzt werden. Bevorzugt wird jedoch die Komponente C) dem Polyisocyanatvernetzer (Komponente A) beigemischt.

Die Komponente C) ist zu 10 bis 90%, bevorzugt zu 10 bis 70% , bezogen auf die Summe der Komponenten A), B), und C), in dem erfindungsgemäßen Beschichtungsmittel enthalten

Als Katalysator D) ist in einer bevorzugten Ausführungsform in einer Menge von 0,1 bis zu 5 Gewichtsprozent, vorzugsweise 0,2 bis 3 Gewichtsprozent, bezogen auf die Summe der Komponenten A), B), und C), in dem erfindungsgemäßen Beschichtungsmittel enthalten.

Beispielsweise ist D) in einer Menge von 3 Gewichtsprozent enthalten, wenn die Komponenten A), B) und C) zusammen 100 g des Beschichtungsmittel ausmachen und dieses darüber hinaus 3 g D) enthält.

Als Katalysatoren D) können organische Carbonsäuren mit einem Schmelzpunkt > 60°C verwendet werden. Beispiele geeigneter Carbonsäuren sind insbesondere Salicylsäure, Benzoesäure, Zitronensäure, Phthalsäure, Terephthalsäure, Isophthalsäure, Dodecansäure, 1.12-Dodecandisäure und/oder Ascorbinsäure. Bevorzugt werden Salicylsäure, Zitronensäure oder Benzoesäure verwendet, wobei auch Mischungen der genannten Carbonsäuren eingesetzt werden können.

Als Katalysator D) kann auch ein Tetraalkylammoniumcarboxylat eingesetzt werden. Beispiele hierfür sind Tetramethylammoniumformiat, Tetramethylammoniumacetat, Tetramethylammoniumpropionat, Tetramethylammoniumbutyrat, Tetramethylammoniumbenzoat, Tetraethylammoniumformiat, Tetraethylammoniumacetat, Tetraethylammoniumpropionat, Tetraethylammoniumbutyrat, Tetraethylammoniumbenzoat, Tetrapropylammoniumformiat, Tetrapropylammoniumacetat, Tetrapropylammonium-propionat, Tetrapropylammoniumbutyrat, Tetrapropylammonium-benzoat, Tetrabutyl-.ammoniumformiat, Tetrabutylammoniumacetat, Tetrabutylammoniumpropionat, Tetrabutylammoniumbutyrat und/oder Tetrabutylammoniumbenzoat. Die genannten Tetraalkylammoniumcarboxylate können allein oder in Mischungen zugesetzt werden.

Als Katalysator D) können auch Metallkomplexe mit Chelatliganden verwendet werden. Bei den Chelatliganden handelt es sich um organische Verbindungen mit wenigstens zwei funktionellen Gruppen, die an Metallatome oder -ionen koordinieren können. Es können beispielsweise die Aluminium- und Zirkon-Chelatkomplexe, wie sie beispielsweise in US-P 4,772,672 A, beschrieben sind, als Katalysator verwendet werden. Bevorzugte Metallchelate sind Chelat auf Basis von Aluminium-, Zirkon-, Titan- und/oder Bor, wie beispielsweise Aluminiumethylacetoacetat und/oder Zirkonethylacetoacetat.

Als Katalysator D) sind ferner Aluminium-, Zirkon-, Titan- und/oder Bor-Alkoholate und/oder Ester davon geeignet.

Als Katalysator D) können zur Katalyse der Urethanreaktion auch Katalysatoren verwendet werden, die sich auf dem Gebiet der PUR-Technologie bewährt haben, z. B. organische Sn(IV)-Sn(II), Zn, Bi-Verbindungen oder tertiäre Amine. Derartige Katalysatoren für Urethanreaktionen werden erfindungsgemäß jedoch nur in Abmischungen mit anderen erfindungsgemäßen Katalysatoren verwendet.

Als Katalysator D) kann auch ein phosphorhaltiger, bevorzugt phosphor- und stickstoff-haltiger Katalysator eingesetzt werden. Dabei können auch Mischungen aus zwei oder mehreren verschiedenen Katalysatoren eingesetzt werden. Beispiele für geeignete phosphorhaltige Katalysatoren sind substituierte Phosphonsäurediester und Diphosphonsäurediester, vorzugsweise aus der Gruppe bestehend aus acyclischen Phosphonsäurediestern, cyclischen Phosphonsäurediestern, acyclischen Diiphosphonsäurediestern und cyclischen Diphosphonsäurediestern. Derartige Katalysatoren sind beispielsweise in der DE-A 102005045228 beschrieben.

Als Katalysator D) kann bevorzugt auch ein aminblockierter Phosphorsäureester und besonders bevorzugt aminblockierter Phosphorsäureethylhexylester und aminblockierter Phosphorsäurephenylester eingesetzt werden. Als Beispiele für Amine, mit welchem die Phosphorsäureester blockiert werden, sind insbesondere tertiäre Amine, beispielsweise Triethylamin, zu nennen. Besonders bevorzugt werden zur Blockierung der Phosphorsäureester tertiäre Amine eingesetzt, die eine gute Wirksamkeit des Katalysators bei Härtungstemperaturen von 100 bis 160 °C aufweisen. Bestimmte mit Amin blockierte Phosphorsäurekatalysatoren sind auch kommerziell erhältlich (z. B. Nacure-Typen der Fa. King Industries). Beispielsweise sei der unter der Bezeichnung Nacure 4167 von der Firma King Industries als besonders geeigneter Katalysator auf der Basis eines Amin - blockierten Phosphorsäureteilesters genannt.

Als Katalysator D) können auch organische Sulfonsäuren in unblockierter oder blockierter Form verwendet werden. Als Sulfonsäure ist grundsätzlich jede organische Sulfonsäure geeignet, bevorzugt sind p-Toluolsulfonsäure und Dodecylbenzolsulfonsäure. Für thermisch, d. h. oberhalb von 100 °C vernetzende Beschichtungssysteme können diese Sulfonsäuren erfindungsgemäß auch in amin-neutralisierter Form bevorzugt eingesetzt werden. Erfindungsgemäß können auch latente, nicht-ionogene Sulfonsäurederivate, die erst oberhalb von 100 °C Sulfonsäuren freisetzen, wie z. B. Addukte von Sulfonsäuren an epoxidhaltige Komponenten, wie es in DE-OS 23 56768 beschrieben wird, eingesetzt werden

Auch Salze der Trifluormethansulfonsäure (Triflate) sind geeignete Sulfonsäure-basierte Katalysatoren.

Der Katalysator D) in den erfindungsgemäßen Beschichtungsmitteln kann allein aus den oben genannten Alternativen bestehen, es können aber auch beliebige Mischungen der Katalysatoren eingesetzt werden.

Das erfindungsgemäße Beschichtungsmittel kann zusätzlich in der Lacktechnologie bekannte Hilfsstoffe und/oder Zusatzstoffe E) wie Stabilisatoren, Lichtschutzmittel, Katalysatoren, zusätzliche Vernetzer, Füllstoffe, Pigmente, Verlaufsmittel oder Rheologiehilfsmittel, wie z. B. sog. "sag control agents", Mikrogele oder pyrogenes Siliciumdioxid oder auch Nanopartikel, wie z. B. in EP 1204701 B1 beschrieben, in typischen Konzentrationen enthalten. Zusätzlich kann die Komponente E) zusätzliche Vernetzer wie in der Lackchemie bekannt, z. B. in Form von Melamin-, Benzoguanamin-Harzen, carbamatfunkionelle Komponenten oder blockierte Polyisocyanate eingesetzt werden. Falls erforderlich, können in der Komponente E) der erfindungsgemäßen Beschichtungsmittel auch in der Lacktechnologie übliche anorganische oder organische Farb- und/oder Effektpigmente eingearbeitet werden.

In einer bevorzugten Ausführungsform ist das erfindungsgemäße Beschichtungsmittel ein pigmentfreies System, also ein Klarlacksystem. Die Komponente E) kann in diesem Fall vorzugsweise in einer Menge von 0,5 bis zu 8 Gewichtsprozent, noch bevorzugter 1 bis 6 % Gewichtsprozent, bezogen auf die Summe der Komponenten A), B), und C), in dem erfindungsgemäßen Beschichtungsmittel enthalten sein. Beispielsweise liegt die Komponente E) in einer Menge von 6 % bezogen auf die Summe der Komponenten A), B) und C) vor, wenn das Beschichtungsmittel, d.h. die Summe der Komponenten A), B), C), D), E) und F), ein Gesamtgewicht von 110 g aufweist, die Summe der Komponenten A), B) und C) dabei 100 g, die Menge an E) 6 g und die Menge an D) und F) jeweils 2 g beträgt.

In einer weiteren bevorzugten Ausführungsform ist das erfindungsgemäße Beschichtungsmittel ein farbiges Beschichtungssystem. Pigmente und Füllstoffe als Komponente E) können in diesem Fall in einer Menge von 10 bis 200 Gewichtsprozent bezogen auf die Summe der Komponenten A), B), und C) in dem erfindungsgemäßen Beschichtungsmittel enthalten sein. Beispielsweise liegt die Komponente E) in einer Menge von 200 Gewichtsprozent bezogen auf die Summe der Komponenten A), B) und C) vor, wenn das Beschichtungsmittel, d. h. die Summe der Komponenten A), B), C), D), E) und F), ein Gesamtgewicht von 110 g aufweist, die Summe der Komponenten A), B) und C) dabei 30 g beträgt, die Menge an E) 60 g beträgt und die Menge an D) und F) jeweils 10 g beträgt.

Weiterhin kann das erfindungsgemäße Beschichtungsmittel organische Lösemittel als Komponente F) enthalten. Geeignete Lösemittel sind z. B. Ketone, Alkohole, Ester oder Aromaten.

Die Komponente F) ist bevorzugt in Mengen von 20 bis zu 150 Gewichtsprozent, noch bevorzugter 30 bis 60 Gewichtspozent, bezogen auf die Summe der Komponenten A), B) und C), in dem erfindungsgemäßen Beschichtungsmittel enthalten.

Die Gesamtheit der jeweiligen Anteile der Komponenten A), B), C), D), E) und F) sind so gewählt, dass sich die Gewichtsanteile zu 100 Gewichtsprozent aufaddieren.

Die Herstellung der erfindungsgemäßen Beschichtungsmittel erfolgt durch Mischung der vorab beschriebenen Komponenten. Das Mischen kann mittels dem Fachmann bekannter Mischer erfolgen, beispielsweise diskontinuierlich in Rührbehältern, Dissolvern, Perlmühlen, Walzenstühlen etc. oder auch kontinuierlich unter Verwendung von Statikmischern oder dergleichen erfolgen.

Die Herstellung der erfindungsgemäßen Beschichtungsmittel erfolgt durch Mischung der vorab beschriebenen Komponenten. Das Mischen kann durch dem Fachmann bekannte Mischer erfolgen, beispielsweise diskontinuierlich in Rührbehältern, Dissolvern, Perlmühlen, Walzenstühlen, etc. oder auch kontinuierlich unter Verwendung von z. B. Statikmischern erfolgen.

Die vorliegende Erfindung wird weiterhin durch die folgenden Figuren und nicht beschränkenden Beispiele veranschaulicht, denen weitere Merkmale, Ausführungsformen, Aspekte und Vorteile der vorliegenden Erfindung entnommen werden können.

### Beispiele:

Sofern nicht anderes angegeben, beziehen sich die Mengenangaben in Prozent in den Beispielen auf das Gewicht.

### Beispiel 1: Herstellung eines Adduktes aus Isocyanatosilan und Trimethylhexandiol (Komponente C der erfindungsgemäßen Beschichtungszusammensetzung))

27.4 g eines Isomerengemisches (ca. 50/50) aus 2,2,4- und 2,4,4-Trimethylhexandiol werden in einem 250 ml 3-Halskolben vorgelegt und unter Rühren mit 0.2 g Dibutylzinndilaurat (DBTDL) versetzt. Unter einem stetigen Stickstoffstrom wird das Gemisch im Wasserbad auf 60°C erwärmt. Anschließend werden unter Rühren 72,4 g 3-Isocyanatopropyltrimethoxysilan so zugetropft, dass die Temperatur nicht über 70 °C ansteigt. Nach vollständiger Zugabe wird das Reaktionsgemisch 6 h bei 60 °C gerührt. Der freie NCO-Gehalt beträgt dann < 0,1%. Das Produkt ist eine klare, mittelviskose Flüssigkeit.

### Beispiel 2 (nicht erfindungsgemäß): Herstellung eines Silan-modifizierten Polyisocyanats

49,58 Gewichtsprozent eines lösemittelfreien, isocyanurat-basierten Polyisocyanats auf Basis Hexamethylendiisocyanat (VESTANAT HT 2500/100, Evonik Industries) und 0,03 % Dibutylzinndilaurat werden in 15 Gewichtsprozent Solvesso 100 (Aromatisches Lösemittel, ExxonMobil gelöst und unter N₂ auf 55 bis 60 °C erwärmt. Das Heizbad wird entfernt und unter Rühren werden 30,39 Gewichtsprozent Bis(3-trimethoxysilylpropyl)-amin (Dynasylan 1124, Evonik Industries) so zugetropft, dass eine Temperatur von ca. 55 bis 60 °C gehalten wird. Nach beendeter Zugabe werden 5 Gewichtsprozent Solvesso 100 dem Gemisch zugeführt, anschließend eine Stunde bei 60 °C nachgerührt und der NCO-Gehalt bestimmt. Der NCO-Gehalt liegt bei 6,59 %. Die Viskosität gemessen bei 23°C beträgt 620 mPas. Der rechnerische Feststoffgehalt beträgt 80 %.

### Beispiel 3: Untersuchung der Materialeigenschaften verschiedener erfindungsgemäßer Beschichtungsmittel im Vergleich zu konventionellen Beschichtungsmitteln

Die erfindungsgemäßen Klarlacke sowie der Vergleich auf Basis eines silan-modifizierten Polyisocyanats gemäß Beispiel 2 (Zusammensetzung Nr. III) und ein 2K-PUR-Klarlack (Zusammensetzung Nr. VIII) wurden gemäß den in der Tabelle 1 angegebenen Mengenteile formuliert.

**Tabelle 1. Zusammensetzung der erfindungsgemäßen Beschichtungsmittel**

| Position | | III (teilsilanisiert, Vergleich) | IV | V | VI | VII | VIII (Vergleich, 2K PUR) |
|---|---|---|---|---|---|---|---|
| 1 | VESTANAT HT 2500 L (90 %ig) | / | 18,30 | 16,68 | 15,32 | 12,72 | 19,24 |
| 2 | Isocyanatosilan-Addukt aus Beispiel 1 | / | 4,87 | 13,32 | 20,39 | 33,88 | / |
| 3 | Nicht-erfindungsgemäßes, silan-modifiziertes Polyisocyanat aus Beisp. 2 | 36,43 | / | / | / | / | / |
| 4 | Setalux® C1767 VV-65 (65 %ig) | 34,98 | 47,81 | 43,16 | 39,32 | 31,74 | 52,20 |
| 5 | Byketol® spezial | 2,60 | 2,60 | 2,60 | 2,60 | 2,60 | 2,60 |
| 6 | Byk® 301 | 0,20 | 0,20 | 0,20 | 0,20 | 0,20 | 0,20 |
| 7 | Butylacetat/Xylol-Gemisch (1:1) | 22,22 | 20,69 | 18,01 | 15,76 | 11,46 | 22,24 |
| 8 | TEAB (10 %ig in Setalux C1767 VV-65) | 0,06 | 1,85 | 2,08 | 2,23 | 2,78 | / |
| 9 | Tinuvin® 292 | 0,26 | 0,27 | 0,29 | 0,31 | 0,34 | 0,26 |
| 10 | Tinuvin® 900 | 3,25 | 3,41 | 3,66 | 3,87 | 4,28 | 3,26 |
| | | | | | | | |
| **Festkörpergehalt** | | | | | | | |
| **(rechnerisch, incl. Trimethoxysilyl-gehalt)** | | 51,9 | 53,5 | 57,6 | 61,0 | 67,6 | 51,3 |
| **Rechnerischer Siliziumgehalt bezogen auf Feskörper [Gew-%]** | | 3,5 | 0,9 | 2,3 | 3,3 | 4,9 | 0,0 |

| | | | | | | | |
|---|---|---|---|---|---|---|---|
| **Setalux® 1767 VV-65:** Polyacrylatpolyol, Nuplex Resins B.V. **Byk® 301:** Polyethermodifiziertes Polydimethylpolysiloxan, Verlaufsmittel, Byk Chemie **Byketol® Special:** Verlaufsmittel auf Basis hochsiedender Lösemittel sowie polyethermodifizierter Polydimethylsiloxane, Byk Chemie **Tinuvin® 292:** sterisch gehindertes Amin, Lichtschutzmittel; BASF SE **Tinuvin® 900:** UV-Absorber; BASF SE | | | | | | | |

Sämtliche Klarlacke wurden als 2-Komponenten-Systeme formuliert, d. h. die Härterkomponente und die Polyolkomponenente wurden unmittelbar vor der Verarbeitung gemischt. Dabei wurde im Falle der erfindungsgemäßen Formulierungen (Zusammensetzungen Nr. IV-VII) das Silan-Addukt (Position 2) zuvor mit dem Polyisocyanat (Position 1) gemischt.

Die Viskosität der Formulierungen betrug, bestimmt als Auslaufzeit im DIN-4-Becher bei 23 °C, ca. 20 Sekunden.

Zur Ermittlung der mechanischen Kenndaten wurden alle Lacke im druckluftunterstützten Spritzauftrag mittels einer HPLV-Pistole auf phosphatierte Stahlbleche (Chemetall Gardobond 26S/60/OC) appliziert und bei 140°C für die Dauer von 22 Minuten ausgehärtet.

Die **Prüfung auf Säurebeständigkeit und Kratzbeständigkeit** erfolgte im Zweischichtaufbau, des Klarlacks über einem schwarzen Basislack. Dazu wurde ein wässriger schwarzer Basislack (Autowave MM 245, tiefschwarz; 100:5 mit Aktivator WB abgemischt, Härtung: 15' 50°C) im Spritzauftrag bei Säurebeständigkeit auf Prüfbleche aus Sondertiefziehmaterial mit RP-Oberfläche nach DIN 1624, 570 x 98 x 0,8 mm und bei Kratzbeständigkeit auf Karosseriebleche (Stahl, 190 x 105 x 0,8 mm DIN 1624) appliziert und nach einer Ablüftzeit von 10 Min. bei Raumtemperatur im Umluftofen für 10 Min. bei 80°C getrocknet. Die Trockenfilmschichtdicke beträgt jeweils ca. 10 µm.

Zur **Prüfung auf Kratzbeständigkeit** wurde ein 45 mm x 20 mm Nylongewebe, Maschenweite 25 µm, wird mit einem 2 Kg-Gewicht beschwert, auf die Prüfplatte, die ihrerseits auf einem Schlitten fixiert ist, aufgelegt und arretiert. Nach Auftrag von 1 ml einer aufgerührten, 0,25%-igen Waschmittellösung (Persil) unmittelbar vor der Prüffläche wird die Prüfplatte mit einer maximalen Auslenkung von jeweils ca. 3,5 cm oszilliert. Nach 80 Doppelhüben (1 s⁻¹) wird die verbliebene Waschflüssigkeit mit Leitungswasser abgespült und mit Druckluft getrocknet. Jeweils vor und nach der Prüfung werden Glanzmessungen (20°-Winkel) vorgenommen.

Erholung (reflow) unter Temperatureinfluß: Die geschädigte Prüfplatte wird 2 h bei 40°C in einem Umluftofen gelagert und anschließend erneut der Glanz der Beschichtung gemessen.

Zur **Prüfung auf Säurebeständigkeit** werden auf die Prüfbleche mittels einer Pipette Tropfen (ca. 0,05 ml) einer 20%-igen Schwefelsäurelösung im Abstand von 2 cm aufgebracht. In einem Temperaturgradientenofen (BYK-Gardner) werden sie 30 min einem Temperaturgradienten in Längsrichtung des Bleches von 35 bis 80 °C unterworfen. Anschließend werden mit Wasser Reste der Säure abgewaschen und nach 24 h einer visuellen Prüfung unterzogen. Zur Beurteilung der Beständigkeit wird der Bereich (Temperatur) eines ersten sichtbaren Angriffs des Klarlacks sowie der einer Zerstörung des Basecoats in °C angegeben. Je höher die jeweilige Temperatur, desto höher ist die Beständigkeit des Klarlackes zu bewerten.

**Tabelle 2: Eigenschaften der Beschichtungen**

| | Beispiel Nr. | | | | | |
|---|---|---|---|---|---|---|
| | III (Vgl.) | IV | V | VI | VII | VIII (2K PUR, Vgl.) |
| Härtung | 22' | 22' | 22' | 22' | 22' | 22' |
| | 140°C | 140°C | 140°C | 140°C | 140°C | 140°C |
| Tiefung (EN ISO 1520) [mm] | 5,5 | 8,5 | 7,0 | 6,0 | 7,0 | 8 |
| Pendelhärte (König, DIN EN ISO 1522) [s], nach 7 d | 166 | 174 | 164 | 162 | 143 | 171 |
| Kugelschlag[In Ibs] (DIN-EN-ISO 6272-1) | 80 | > 80 | >80 | >80 | 80 | 80 |
| | | | | | | |
| MEK-Test [ASTM D 4752] (Doppelhübe, 1 kg Auflagegewicht) | > 150 | > 150 | > 150 | > 150 | > 150 | > 150 |
| Säurebeständigkeit; Gradientenofenmethode [°C] | <37/61°C | 47/67°C | 43/61°C | 40/61°C | 46/71°C | 47/65°C |
| 1. Angriff / Zerstörung des Klarlacks | | | | | | |
| Kratzbeständigkeit Ausgangsglanz / Glanzverlust [Skt] | 82/1 | 80/16 | 82/11 | 81/5 | 79/2 | 79/20 |

Die Ergebnisse in Tabelle 2 belegen, dass die erfindungsgemäßen Beschichtungsmittel, insbesondere bei höheren Gehalten der Komponente C) (Zusammensetzungen mit den Nummern VI, VII) eine hervorragende Kratzbeständigkeit aufweisen, die dem relevanten Vergleich auf Basis Trialkoxysilan-modifizierter Polyisocyanate als Vernetzer (Zusammensetzung Nr. III) adäquat und den 2K-PUR-Lacken diesbezüglich weit überlegen sind. Dabei sind die Chemikalienbeständigkeiten der erfindungsgemäßen Beschichtungen der des kratzbeständigen Klarlacks des Vergelichsbeispiels (Zusammensetzung Nr. III), ausgedrückt als Säurebeständigkeit und hier insbesondere bzgl. der Temperatur des ersten erkennbaren Angriffs der Schwefelsäure, deutlich überlegen. Ferner kann Tab. 1 entnommen werden, dass die Festkörpergehalte der erfindungsgemäßen Beschichtungszusammensetzung (Beispiele IV-VII, insbesondere denen mit hervorragender Kratzbeständigkeit (Beispiele VI und VII) gegenüber dem kratzbeständigen Vergleichssystem (Beispiel III) signifikant erhöht sind.

## Patentansprüche

1. Beschichtungsmittel umfassend
A) wenigstens ein aliphatisches oder cycloaliphatisches Polyisocyanat, das eine NCO-Funktionalität von wenigstens 2, bevorzugt 2,8 bis 6 aufweist,
B) wenigstens ein Bindemittel, bevorzugt ein hydroxylgruppenhaltiges Bindemittel, wobei der Anteil von B), bezogen auf die Summe der Komponenten A), B) und C), 20 bis 60 Gewichtsprozent beträgt,
C) wenigstens ein Addukt von einem Isocyanato-trialkoxysilan und einem mehrwertigen Alkohol,
wobei mehr als 90, bevorzugter mehr als 95, am bevorzugtesten mehr als 99 Prozent der Hydroxygruppen des mehrwertigen Alkohols durch Reaktion mit dem Isocyanato-trialkoxysilan umgesetzt sind und weniger als 0.1 Gew-% der Isocyanatgruppen aus dem Isocyanatotrialkyloxysilan im Addukt reaktiv sind.
D) wenigstens einen Katalysator ausgewählt aus der Gruppe, die Lewis-Säuren, Phosphorsäure oder phosphorige Säure sowie deren Ester, blockierte oder unblockierte Sulfonsäuren, Schwefelsäure, Carbonsäuren mit einem Schmelzpunkt > 60 °C und Tetralkylammoniumcarboxylate umfasst.
E) optional wenigstens ein Hilfsstoff ausgewählt aus der Gruppe umfassend isocyanatfreie Vernetzer, Additive, Stabilisatoren und Zusatzstoffe, und
F) optional organische Lösungsmittel.

2. Beschichtungsmittel nach Anspruch 1, wobei der Anteil von A), bezogen aus die Summe der Komponenten A), B) und C), 15 bis 40 Gewichtsprozent beträgt.

3. Beschichtungsmittel nach einem der Ansprüche 1 bis 2, wobei der Anteil von C), bezogen aus die Summe der Komponenten A), B) und C), 10 bis 70 Gewichtsprozent beträgt.

4. Beschichtungsmittel nach einem der Ansprüche 1 bis 3, wobei das wenigstens eine aliphatische oder cycloaliphatische Polyisocyanat durch Oligomerisation eines Diisocyanates hergestellt wird,
wobei das Diisocyanat bevorzugt aus der Gruppe ausgewählt ist, die Isophorondiisocyanat, Hexamethylendiisocyanat, 4,4'- und/oder 2,4'-Diisocyanatodicyclohexylmethan, 2-Methylpentandiisocyanat, 2,4,4-Trimethylhexamethylendiisocyanat und 2,2,4-Trimethylhexamethylendiisocyanat umfasst.

5. Beschichtungsmittel nach einem der Ansprüche 1 bis 4, wobei das wenigstens eine Bindemittel aus der Gruppe ausgewählt ist, die hydroxylgruppenhaltige Polyester, Polyether, Polyacrylate, Polycarbonate und Polyurethane umfasst,
und wobei das Bindemittel eine OH-Zahl von 20 bis 500 mg KOH/g und eine mittlere Molmasse von 250 bis 6000 g/Mol aufweist, bestimmt wie in der Beschreibung angegeben.

6. Beschichtungsmittel nach einem der Ansprüche 1 bis 5, wobei es sich bei dem Addukt von einem Isocyanato-trialkyoxysilan und mehrwertigen Alkohol um ein Addukt aus der Umsetzung von einem Isocyanato-trialkoxysilan, das einen mit wenigstens einer -Si(OR₁)(OR₂)(OR₃)-Gruppe und einer Isocyanatgruppe substituierten Alkylrest darstellt, und einem mehrwertigen Alkohol handelt,
wobei es sich bei dem mit wenigstens einer -Si(OR₁)(OR₂)(OR₃)-Gruppe und einer Isocyanatgruppe substituierten Alkylrest um ein lineares oder verzweigtes Alkan mit 1 bis 4 Kohlenstoffatomen handelt,
und wobei R₁, R₂ und R₃ jeweils und unabhängig voneinander aus der Gruppe ausgewählt sind, die Methyl, Ethyl, Propyl und Butyl umfasst.

7. Beschichtungsmittel nach Anspruch 6, wobei es sich bei dem Isocyanato-trialkyoxysilan um eine Verbindung der Formel (I) handelt,
OCN-(CH₂)ₙ-Si(OR₁)(OR₂)(OR₃) (I),
wobei n 1, 2, 3, 4, 5 oder 6, bevorzugt 3, ist,
und wobei R₁, R₂ und R₃ jeweils und unabhängig voneinander aus der Gruppe ausgewählt sind, die Methyl, Ethyl und Propyl umfasst, und bevorzugt jeweils Methyl sind.

8. Beschichtungsmittel nach einem der Ansprüche 1 bis 6, wobei der mehrwertige Alkohol im Addukt C) zu wenigstens 75, bevorzugt wenigstens 90, noch bevorzugter wenigstens 95% ein nichtzyklischer mehrwertiger Alkohol ist.

9. Beschichtungsmittel nach einem der Ansprüche 1 bis 8, wobei das Beschichtungsmittel bei 10 bis 200 °C, bevorzugt 20 bis 160 °C härtbar ist.

10. Beschichtungsmittel nach einem der Ansprüche 1 bis 9, wobei es sich bei dem Beschichtungsmittel um ein nicht wässriges Beschichtungsmittel handelt.

11. Verfahren umfassend die Schritte
a) Bereitstellung des Beschichtungsmittels nach einem der Ansprüche 1 bis 10,
b) Aufbringen des Beschichtungsmittels auf eine zu beschichtende Oberfläche, und
c) Aushärten des Beschichtungsmittels.

12. Verfahren nach Anspruch 11, wobei die Temperatur in Schritt c) 10 bis 200 °C, bevorzugt 20 bis 160 °C beträgt.

13. Beschichtung erhältlich durch Aushärten des Beschichtungsmittels nach einem der Ansprüche 1 bis 10 oder durch das Verfahren nach einem der Ansprüche 11 oder 12.

14. Beschichtete Metall-, Glas-, Kunststoff- oder Holzoberfläche umfassend die Beschichtung nach Anspruch 13.

15. Primer, Zwischenschicht, Decklack oder Klarlack, bevorzugt als Bestandteil eines Decklacks oder Klarlacks in einer Mehrschichtlackierung bei der Fahrzeuglackierung, umfassend das Beschichtungsmittel nach einem der Ansprüche 1 bis 10.

16. Verwendung des Beschichtungsmittels nach einem der Ansprüche 1 bis 10 zur Beschichtung einer Metall-, Glas-, Kunststoff- oder Holzoberfläche.

## Claims

1. Coating material comprising
A) at least one aliphatic or cycloaliphatic polyisocyanate having an NCO functionality of at least 2, preferably 2.8 to 6,
B) at least one binder, preferably a hydroxyl-containing binder, where the fraction of B), based on the sum of the components A), B) and C), is 20 to 60 weight per cent,
C) at least one adduct of an isocyanatotrialkoxysilane and a polyhydric alcohol,
where more than 90, more preferably more than 95, most preferably more than 99 per cent of the hydroxyl groups in the polyhydric alcohol have been converted by reaction with the isocyanatotrialkoxysilane, and less than 0.1 wt% of the isocyanate groups from the isocyanatotrialkoxysilane are reactive in the adduct,
D) at least one catalyst selected from the group consisting of Lewis acids, phosphoric acid or phosphorous acid and also the esters thereof, blocked or non-blocked sulphonic acids, sulphuric acid, carboxylic acids having a melting point > 60°C and tetraalkylammonium carboxylates,
E) optionally at least one auxiliary selected from the group consisting of isocyanate-free crosslinkers, additives, stabilizers and adjuvants, and
F) optionally organic solvents.

2. Coating material according to Claim 1, where the fraction of A), based on the sum of the components A), B) and C), is 15 to 40 weight per cent.

3. Coating material according to either of Claims 1 and 2, where the fraction of C), based on the sum of the components A), B) and C), is 10 to 70 weight per cent.

4. Coating material according to any of Claims 1 to 3, where the at least one aliphatic or cycloaliphatic polyisocyanate is prepared by oligomerization of a diisocyanate,
the diisocyanate being preferably selected from the group consisting of isophorone diisocyanate, hexamethylene diisocyanate, 4,4'- and/or 2,4'-diisocyanatodicyclohexylmethane, 2-methylpentane diisocyanate, 2,4,4-trimethylhexamethylene diisocyanate and 2,2,4-trimethylhexamethylene diisocyanate.

5. Coating material according to any of Claims 1 to 4, where the at least one binder is selected from the group consisting of hydroxyl-containing polyesters, polyethers, polyacrylates, polycarbonates and polyurethanes,
and where the binder has an OH number of 20 to 500 mg KOH/g and an average molar mass of 250 to 6000 g/mol, determined as stated in the description.

6. Coating material according to any of Claims 1 to 5, where the adduct of an isocyanatotrialkoxysilane and polyhydric alcohol is an adduct from the reaction of an isocyanatotrialkoxysilane, which represents an alkyl radical substituted by at least one Si (OR₁) (OR₂) (OR₃) group and an isocyanate group, and a polyhydric alcohol,
where the alkyl radical substituted by at least one Si (OR₁) (OR₂) (OR₃) group and an isocyanate group is a linear or branched alkane having 1 to 4 carbon atoms,
and where R₁, R₂ and R₃, in each case and independently of one another, are selected from the group consisting of methyl, ethyl, propyl and butyl.

7. Coating material according to Claim 6, where the isocyanatotrialkoxysilane is a compound of the formula (I),
OCN-(CH₂)ₙ-Si(OR₁)(OR₂)(OR₃) (I),
where n is 1, 2, 3, 4, 5 or 6, preferably 3,
and where R₁, R₂ and R₃, in each case and independently of one another, are selected from the group consisting of methyl, ethyl and propyl, and are preferably each methyl.

8. Coating material according to any of Claims 1 to 6, where the polyhydric alcohol in the adduct C) is a non-cyclic polyhydric alcohol to an extent of at least 75%, preferably at least 90%, more preferably at least 95%.

9. Coating material according to any of Claims 1 to 8, where the coating material is curable at 10 to 200°C, preferably 20 to 160°C.

10. Coating material according to any of Claims 1 to 9, where the coating material is a non-aqueous coating material.

11. Process comprising the steps of:
a) providing the coating material according to any of Claims 1 to 10,
b) applying the coating material to a surface to be coated, and
c) curing the coating material.

12. Process according to Claim 11, where the temperature in step c) is 10 to 200°C, preferably 20 to 160°C.

13. Coating obtainable by curing the coating material according to any of Claims 1 to 10 or by the process according to either of Claims 11 and 12.

14. Coated metal, glass, plastic or wood surface comprising the coating according to Claim 13.

15. Primer, tie coat, topcoat or clearcoat, preferably as part of a topcoat or clearcoat in a multi-coat paint system in vehicle finishing, comprising the coating material according to any of Claims 1 to 10.

16. Use of the coating material according to any of Claims 1 to 10 for coating a metal, glass, plastic or wood surface.

## Revendications

1. Agent de revêtement comprenant :
A) au moins un polyisocyanate aliphatique ou cycloaliphatique, qui présente une fonctionnalité NCO d'au moins 2, de préférence de 2,8 à 6,
B) au moins un liant, de préférence un liant contenant des groupes hydroxyle, la proportion de B), par rapport à la somme des composants A), B) et C), étant de 20 à 60 pour cent en poids,
C) au moins un adduit d'un isocyanato-trialcoxysilane et d'un alcool polyvalent,
plus de 90, de préférence plus de 95, de manière préférée entre toutes plus de 99 pour cent des groupes hydroxyle de l'alcool polyvalent étant transformés par réaction avec l'isocyanato-trialcoxysilane et moins de 0,1 % en poids des groupes isocyanate de l'isocyanato-trialcoxysilane dans l'adduit étant réactifs,
D) au moins un catalyseur choisi dans le groupe qui comprend les acides de Lewis, l'acide phosphorique ou l'acide phosphoreux, ainsi que leurs esters, les acides sulfoniques bloqués ou non bloqués, l'acide sulfurique, les acides carboxyliques ayant un point de fusion > 60 °C et les carboxylates de tétraalkylammonium,
E) éventuellement au moins un adjuvant choisi dans le groupe comprenant les agents de réticulation sans isocyanate, les additifs, les stabilisateurs et les ajouts, et
F) éventuellement des solvants organiques.

2. Agent de revêtement selon la revendication 1, dans lequel la proportion de A), par rapport à la somme des composants A), B) et C), est de 15 à 40 pour cent en poids.

3. Agent de revêtement selon l'une quelconque des revendications 1 à 2, dans lequel la proportion de C), par rapport à la somme des composants A), B) et C), est de 10 à 70 pour cent en poids.

4. Agent de revêtement selon l'une quelconque des revendications 1 à 3, dans lequel ledit au moins un polyisocyanate aliphatique ou cycloaliphatique est fabriqué par oligomérisation d'un diisocyanate,
le diisocyanate étant de préférence choisi dans le groupe qui comprend le diisocyanate d'isophorone, le diisocyanate d'hexaméthylène, le 4,4'- et/ou 2,4'-diisocyanatodicyclohexylméthane, le diisocyanate de 2-méthylpentane, le diisocyanate de 2,4,4-triméthylhexaméthylène et le diisocyanate de 2,2,4-triméthylhexaméthylène.

5. Agent de revêtement selon l'une quelconque des revendications 1 à 4, dans lequel ledit au moins un liant est choisi dans le groupe qui comprend les polyesters contenant des groupes hydroxyle, les polyéthers, les polyacrylates, les polycarbonates et les polyuréthanes,
et dans lequel le liant présente un indice OH de 20 à 500 mg de KOH/g et une masse molaire moyenne de 250 à 6 000 g/mol, déterminée tel qu'indiqué dans la description.

6. Agent de revêtement selon l'une quelconque des revendications 1 à 5, dans lequel l'adduit d'un isocyanato-trialcoxysilane et d'un alcool polyvalent est un adduit issu de la réaction d'un isocyanato-trialcoxysilane, qui est un radical alkyle substitué avec au moins un groupe -Si(OR₁)(OR₂)(OR₃) et un groupe isocyanate, et d'un alcool polyvalent,
le radical alkyle substitué avec au moins un groupe - Si (OR₁) (OR₂) (OR₃) et un groupe isocyanate étant un alcane linéaire ou ramifié de 1 à 4 atomes de carbone, et R₁, R₂ et R₃ étant chacun choisis indépendamment les uns des autres dans le groupe qui comprend méthyle, éthyle, propyle et butyle.

7. Agent de revêtement selon la revendication 6, dans lequel l'isocyanato-trialcoxysilane est un composé de la formule (I) :
OCN-(CH₂)ₙ-Si(OR₁)(OR₂)(OR₃) (I)
dans laquelle n représente 1, 2, 3, 4, 5 ou 6, de préférence 3,
et dans laquelle R₁, R₂ et R₃ sont chacun choisis indépendamment les uns des autres dans le groupe qui comprend méthyle, éthyle et propyle, et représentent chacun de préférence méthyle.

8. Agent de revêtement selon l'une quelconque des revendications 1 à 6, dans lequel l'alcool polyvalent dans l'adduit C) est à hauteur d'au moins 75, de préférence d'au moins 90, de manière encore davantage préférée d'au moins 95 %, un alcool polyvalent non cyclique.

9. Agent de revêtement selon l'une quelconque des revendications 1 à 8, dans lequel l'agent de revêtement est durcissable à une température de 10 à 200 °C, de préférence de 20 à 160 °C.

10. Agent de revêtement selon l'une quelconque des revendications 1 à 9, dans lequel l'agent de revêtement est un agent de revêtement non aqueux.

11. Procédé comprenant les étapes suivantes :
a) la préparation de l'agent de revêtement selon l'une quelconque des revendications 1 à 10,
b) l'application de l'agent de revêtement sur une surface à revêtir, et
c) le durcissement de l'agent de revêtement.

12. Procédé selon la revendication 11, dans lequel la température à l'étape c) est de 10 à 200 °C, de préférence de 20 à 160 °C.

13. Revêtement pouvant être obtenu par durcissement de l'agent de revêtement selon l'une quelconque des revendications 1 à 10 ou par le procédé selon l'une quelconque des revendications 11 ou 12.

14. Surface en métal, en verre, en matière plastique ou en bois revêtue, comprenant le revêtement selon la revendication 13.

15. Agent primaire, couche intermédiaire, vernis de recouvrement ou vernis transparent, de préférence en tant que constituant d'un vernis de recouvrement ou d'un vernis transparent dans un vernissage multicouche dans le cadre du vernissage de véhicules automobiles, comprenant l'agent de revêtement selon l'une quelconque des revendications 1 à 10.

16. Utilisation de l'agent de revêtement selon l'une quelconque des revendications 1 à 10 pour le revêtement d'une surface en métal, en verre, en matière plastique ou en bois.
